# FASCICULE DE BREVET EUROPEEN

(11) **EP 1 474 628 B1**
(45) Date de publication et mention de la délivrance du brevet: **28.12.2005**
(21) Numéro de dépôt: 03718838.0
(22) Date de dépôt: 05.02.2003
(51) Int. Cl.: F16L 37/084

(54) **RONDELLE D ACCROCHAGE POUR DISPOSITIF DE RACCORDEMENT DE TUBE**
VERBINDUNGSELEMENT FÜR ROHRKUPPLUNG
ATTACHMENT RING FOR A TUBE-CONNECTING DEVICE

(30) Priorité: 11.02.2002 FR 0201620
(43) Date de publication de la demande: 10.11.2004
(73) Titulaire: LEGRIS SA, 35000 Rennes (FR)
(72) Inventeur: LE QUERE, Philippe, F-35830 Betton (FR)
(74) Mandataire: Lavialle, Bruno François Stéphane
(86) Numéro de dépôt international: PCT/FR2003/000351
(87) Numéro de publication internationale: WO 2003/069207

(56) Documents cités:
- EP-A- 0 616 161
- US-A- 4 953 898
- US-A- 5 366 262

## Description

La présente invention concerne une rondelle d'accrochage pour un dispositif de raccordement, tel qu'un raccord à connexion instantanée utilisable dans un circuit de transport de fluide notamment pour raccorder un tube à un autre tube, à un élément émetteur de fluide comme une pompe ou un élément récepteur de fluide comme un réservoir.

### ARRIERE-PLAN DE L'INVENTION

Un dispositif de raccordement de type connu comprend généralement un corps pourvu d'un alésage pour recevoir une extrémité du tube et des moyens de retenue du tube dans l'alésage. Ces moyens comprennent une rondelle élastiquement déformable possédant une circonférence intérieure qui a un diamètre inférieur à un diamètre extérieur du tube et est divisée en une pluralité de dents, et une partie extérieure qui est reçue dans une gorge ménagée dans l'alésage.

Lors de l'introduction du tube, les dents sont soulevées par flexion pour laisser passer le tube et, sous l'effet de l'élasticité du matériau constituant la rondelle, l'extrémité libre des dents est appliquée sur la surface externe du tube. Sous l'effet d'un effort d'extraction exercé sur le tube ou de la mise sous pression du circuit dans lequel le dispositif de raccordement est implanté, le tube amorce un mouvement de recul qui est stoppé lorsque l'extrémité libre des dents vient mordre la surface extérieure du tube et que les dents s'arcboutent et s'opposent à l'effort exercé sur le tube.

Il existe des dents qui sont délimitées par des fentes radiales et qui ont une forme générale en trapèze dont la petite base est disposée du côté intérieur de la rondelle. L'extrémité libre des dents destinée à s'engager sur la surface externe du tube est alors de relativement grande dimension, ce qui permet une retenue efficace du tube. En revanche, la rondelle ainsi réalisée est très rigide de sorte que l'introduction du tube est difficile et que les dents ont tendance à rayer la surface externe du tube.

Pour obvier à cet inconvénient, on a pensé à augmenter la longueur des parties de liaison reliant les dents les unes aux autres. Les dents ont alors une forme générale en trapèze dont la grande base est disposée à l'intérieur de la rondelle. La longueur du bord de l'extrémité libre est plus faible qu'avec la rondelle précédente, de sorte que la résistance à l'arrachement du tube est moins élevée. En outre, cette forme engendre des zones de concentration de contraintes au niveau de la zone de raccordement des dents aux parties de liaison, de sorte que ce type de rondelles a une faible tenue en endurance.

### OBJET DE L'INVENTION

Il existe donc un besoin, non satisfait de manière commode à ce jour, d'une rondelle d'accrochage qui assure une ferme retenue du tube, qui est endurante et qui permet une introduction relativement aisée du tube dans le dispositif de raccordement.

### BREVET DESCRIPTION DE L'INVENTION

A cet effet, on prévoit, selon l'invention, une rondelle d'accrochage pour dispositif de raccordement de tube, la rondelle étant déformable et ayant une circonférence intérieure divisée en une pluralité de dents possédant une partie active reliée par une partie intermédiaire à une partie de racine, la partie intermédiaire étant délimitée latéralement par deux bords parallèles et en ce que la partie active a une largeur supérieure à une largeur de la partie intermédiaire entre les deux bords parallèles.

Ainsi, la forme de la partie active permet l'obtention d'une grande zone de contact entre la dent et le tube. Cette forme de la dent assure en outre une bonne répartition des contraintes, améliorant ainsi la tenue en endurance de la rondelle. De plus, les parties de liaison sont de relativement grande longueur, de sorte que les parties de liaison ont une souplesse adaptée aux mouvements des dents.

D'autres caractéristiques et avantages de l'invention ressortiront à la lecture de la description qui suit d'un mode de réalisation particulier non limitatif de l'invention.

### BREVE DESCRIPTION DES DESSINS

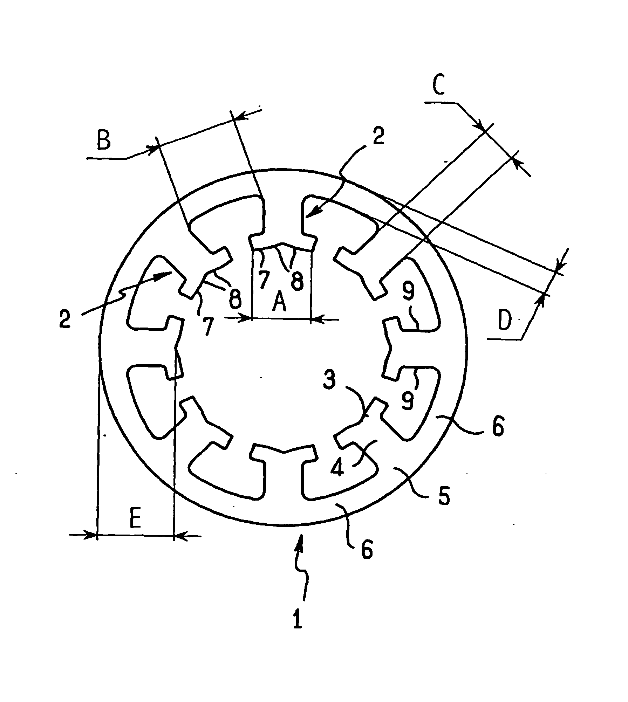

Il sera fait référence à la figure unique annexée qui représente une vue de face d'une rondelle d'accrochage conforme à l'invention.

### DESCRIPTION DETAILLEE D'UN MODE DE REALISATION DE L'INVENTION

La rondelle d'accrochage ici décrite est destinée à équiper un dispositif de raccordement d'un tube métallique ou en matière plastique à un élément d'un circuit de transport de fluide, tel qu'un autre tube, un organe émetteur ou récepteur de fluide. Ce dispositif de raccordement comporte un corps pourvu d'un alésage pour recevoir une extrémité de ce tube et des moyens de retenue du tube dans l'alésage ,dont fait partie la rondelle d'accrochage. La rondelle d'accrochage est par exemple logée dans une gorge ménagée dans l'alésage.

La rondelle d'accrochage conforme à l'invention est de préférence réalisée en un matériau élastiquement déformable, par exemple un acier inoxydable.

En référence aux figures, la rondelle d'accrochage, généralement désignée en 1, a ici une forme tronconique annulaire et possède une circonférence intérieure divisée en une pluralité de dents généralement désignées en 2 qui comportent une partie active 3 destinée à engager la surface externe du tube et reliée par une partie intermédiaire 4 à une partie de racine 5.

La partie intermédiaire 4 est délimitée latéralement par deux bords 9 parallèles l'un à l'autre. Chaque dent a ainsi une forme générale en T dont la barre est formée par- la partie active 3 qui s'étend à l'intérieur de la rondelle.

Les parties de racine 5 sont reliées entre elles par des parties de liaison 6.

La largeur A de la partie active 3 est au moins égale à 4/3 de la largeur C (mesurée entre les bords 9) de la partie intermédiaire 4 et au plus égale à environ deux fois la largeur C de la partie intermédiaire 4.

Les parties de liaison 6 ont une largeur D comprise entre 0,5 et une fois la largeur C des parties intermédiaires.

Les parties intermédiaires 4 au niveau de leur raccordement aux parties de racine 5 sont espacées d'une distance B au moins égale à environ la largeur A des parties actives 3.

Les dents 2 ont une longueur E sensiblement égale à la distance B séparant les parties intermédiaires 4 au niveau de leur raccordement aux parties de racine 5.

On remarquera que la partie active 3 comporte ici un bord terminal 7 qui comporte des pointes de cramponnage 8.

Les pointes de cramponnage 8 sont réalisées en effectuant une découpe en arc de cercle dans le bord 7 pour réaliser deux pointes de cramponnage 8. Les pointes de cramponnage 8 peuvent également être réalisées différemment, par exemple par des découpes triangulaires ou rectangulaires... et leur nombre peut également être différent de deux.

Bien entendu, l'invention n'est pas limitée au mode de réalisation décrit et on peut y apporter des variantes de réalisation sans sortir du cadre de l'invention tel que défini par les revendications.

En particulier, les rapports de dimensions mentionnés plus haut peuvent être modifiés pour adapter l'effort de retenue exercé par la rondelle au matériau constituant le tube, pour satisfaire à des contraintes particulières d'endurance ou pour augmenter ou atténuer l'effort qu'il est nécessaire d'exercer sur le tube pour l'introduire dans le dispositif de raccordement.

## Revendications

1. Rondelle d'accrochage pour dispositif de raccordement de tube, la rondelle étant déformable et ayant une circonférence intérieure divisée en une pluralité de dents (2) possédant une partie active (3) reliée par une partie intermédiaire (4) à une partie de racine (5), **caractérisée en ce que** la partie intermédiaire est délimitée latéralement par deux bords parallèles (9) et **en ce que** la partie active a une largeur (A) supérieure à une largeur (C) de la partie intermédiaire entre les deux bords parallèles.

2. Rondelle d'accrochage selon la revendication 1, **caractérisée en ce que** la largeur (A) de la partie active (3) est au moins égale à 4/3 de la largeur (C) de la partie intermédiaire (4).

3. Rondelle d'accrochage selon la revendication 1 ou la revendication 2, **caractérisée en ce que** la largeur (A) de la partie active (3) est au plus égale à environ deux fois la largeur (C) de la partie intermédiaire (4).

4. Rondelle d'accrochage selon l'une quelconque des revendications 1 à 3, **caractérisée en ce que** les parties de racine (5) sont reliées les unes aux autres par des parties de liaison (6) ayant une largeur (D) comprise entre 0,5 et une fois la largeur (C) des parties intermédiaires (4).

5. Rondelle d'accrochage selon l'une quelconque des revendications 1 à 4, **caractérisée en ce que** les parties intermédiaires (4) au niveau de leur raccordement aux parties de racine (5) sont espacées d'une distance (B) au moins égale à environ la largeur (A) des parties actives (3).

6. Rondelle d'accrochage selon la revendication 5, **caractérisée en ce que** les dents (2) ont une longueur (E) sensiblement égale à la distance (B) séparant les parties intermédiaires (5) au niveau de leur raccordement aux parties de racine (5).

## Patentansprüche

1. Verbindungsscheibe für eine Rohrverbindungsvorrichtung, wobei die Scheibe verformbar ist und einen Innenumfang hat, der in eine Vielzahl von Zähnen (2) unterteilt ist, die einen aktiven Abschnitt (3) besitzen, der über einen Zwischenabschnitt (4) mit einem Basisabschnitt (5) verbunden ist, **dadurch gekennzeichnet, dass** der Zwischenabschnitt seitlich von zwei parallelen Rändern (9) begrenzt ist und dass der aktive Abschnitt eine Breite (A) hat, die größer als eine Breite (C) des Zwischenabschnittes zwischen den beiden parallelen Rändern ist.

2. Verbindungsscheibe nach Anspruch 1, **dadurch gekennzeichnet, dass** die Breite (A) des aktiven Abschnittes (3) mindestens gleich 4/3 der Breite (C) des Zwischenabschnittes (4) ist.

3. Verbindungsscheibe nach Anspruch 1 oder Anspruch 2, **dadurch gekennzeichnet, dass** die Breite (A) des aktiven Abschnittes (3) höchstens gleich ungefähr der zweifachen Breite (C) des Zwischenabschnittes (4) ist.

4. Verbindungsscheibe nach einem der Ansprüche 1 bis 3, **dadurch gekennzeichnet, dass** die Basisabschnitte (5) miteinander über Verbindungsabschnitte (6) verbunden sind, die eine Breite (D) haben, die zwischen dem 0,5-fachen und dem einfachen der Breite (C) der Zwischenabschnitte (4) liegt.

5. Verbindungsscheibe nach einem der Ansprüche 1 bis 4, **dadurch gekennzeichnet, dass** die Zwischenabschnitte (4) im Bereich ihrer Verbindung mit den Basisabschnitten (5) zueinander einen Abstand (B) haben, der mindestens gleich ungefähr der Breite (A) der aktiven Abschnitte (3) ist.

6. Verbindungsscheibe nach Anspruch 5, **dadurch gekennzeichnet, dass** die Zähne (2) eine Länge (E) haben, die im wesentlichen gleich dem Abstand (B) ist, der die Zwischenabschnitte (5) im Bereich ihrer Verbindung mit den Basisabschnitten (5) trennt.

## Claims

1. A fastener washer for a tube coupling device, the washer being deformable and having an inside circumference subdivided into a plurality of teeth (2) each possessing an active portion (3) connected via an intermediate portion (4) to a root portion (5), the washer being **characterized in that** the intermediate portion is defined laterally by two parallel edges (9), and **in that** the active portion is of a width (A) greater than a width (C) of the intermediate portion between the two parallel edges.

2. A fastener washer according to claim 1, **characterized in that** the length (A) of the active portion (3) is not less than 4/3rds the width (C) of the intermediate portion (4).

3. A fastener washer according to claim 1 or claim 2, **characterized in that** the width (A) of the active portion (3) is not more than about twice the width (C) of the intermediate portion (4).

4. A fastener washer according to any one of claims 1 to 3, **characterized in that** the root portions (5) are connected to one another by connection portions (6) of width (D) lying in the range 0.5 to 1.0 times the width (C) of the intermediate portions (4).

5. A fastener washer according to any one of claims 1 to 4, **characterized in that** the intermediate portions (4) are spaced apart where they join the root portions (5) by a distance (B) that is not less than about the width (A) of the active portions (3).

6. A fastener washer according to claim 5, **characterized in that** the teeth (2) are of a length (E) that is substantially equal to the distance (B) between the intermediate portions (5) where they join the root portions (5).
